# EUROPEAN PATENT APPLICATION

(11) **EP 4 768 409 A2**
(43) Date of publication of application: **01.07.2026**
(21) Application number: 24872623.4
(22) Date of filing: 12.03.2024
(51) Int. Cl.: B65H 20/12, A23P 10/10, B65H 23/26, B65H 27/00

(54) **FABRIC TRANSFER ROLLER UNIT OF FILM-TYPE EDIBLE PRODUCT MANUFACTURING DEVICE**

(30) Priority: 27.09.2023 KR 20230130806
(71) Applicant: People & Technology Inc., Gumi-si, Gyeongsangbuk-do 39422 (KR)
(72) Inventor: KIM, Joonsup, Gumi-si, Gyeongsangbuk-do 39422 (KR); SHIN, Soonwoo, Gumi-si, Gyeongsangbuk-do 39212 (KR); LEE, Byeong Geun, Chilgok-gun, Gyeongsangbuk-do 39823 (KR)
(74) Representative: BCKIP Part mbB
(86) International application number: PCT/KR2024/003182
(87) International publication number: WO 2025/070908

(57) **Abstract**

The present invention relates to a fabric transfer roller unit of a film-type edible product manufacturing device. The fabric transfer roller unit guides transfer of a fabric while being installed on an edible product manufacturing device configured to print an edible raw material on the upper surface of a fabric having a predetermined width, which is continuously supplied from the outside, and which passes through the edible product manufacturing device, thereby manufacturing a film-type edible product. The fabric transfer roller unit guides transfer comprises: multiple horizontal maintaining rolls for horizontally supporting the transferred fabric; a suction roll for suctioning the bottom surface of the fabric that has passed through the horizontal maintaining rolls; a negative pressure providing unit for providing a negative pressure to the suction roll; and a roller driving portion for axially rotating the suction roll such that the fabric receives a transfer force from the suction roll and thus receives a transfer force delivered from the suction roll. The fabric transfer roller unit of the film-type edible product manufacturing device of the present invention, configured as described above, stably maintains the transfer path of the continuously supplied fabric such that the edible raw material can be printed with a high quality, and printed edible raw material is prevented from peeling off or being damaged during transfer of the fabric, thereby producing an edible product with a uniform quality.

## Description

### [Technical Field]

The present invention relates to a transfer roller unit applied to a film-type edible product manufacturing apparatus. More particularly, the present invention relates to a fabric transfer roller unit for a film-type edible product manufacturing apparatus, which stably maintains a transfer path of a continuously supplied fabric and prevents lifting or damage of printed matter printed on the fabric.

### [Background Art]

A film-type edible product is a product formed by mixing various food ingredients and shaping the mixture into a thin film form, and is manufactured in a size that can be placed in the mouth. When the film-type edible product is placed, for example, on the tongue, it gradually dissolves, and substances contained in the product are absorbed into the body.

Such film-type edible products are available in various types depending on their purpose. For example, products for removing bad breath or maintaining dental hygiene, and products for refreshing the mouth after meals, are known. Since film-type edible products take the form of a thin film, they have the disadvantage of being vulnerable to moisture, and thus are generally packaged in sealed packages one by one.

As a manufacturing apparatus for producing such film-type edible products, Korean Patent Publication No. 10-1214140 (Method and apparatus for manufacturing edible film products) has been disclosed.

However, the disclosed manufacturing method has disadvantages in that the production speed is slow and the edible film is first produced in the form of a fabric and then cut and produced using a pick-and-place method, thereby making it difficult to implement various shapes. That is, only simple rectangular shapes can be produced. In addition, since coating of the raw material is performed at once, when a small amount of raw material is loaded, there is a disadvantage in that the loss of usable raw material is large relative to the input amount.

Manufacturing apparatuses employing a metal mask printing method have also been used. However, in conventional metal mask type manufacturing apparatuses, it is difficult to print products having printing patterns with wide openings, and since raw materials are poured onto the metal mask at once for printing, the exposure time of the paste-like material on the metal mask becomes long, making the apparatus vulnerable to contamination. In addition, due to changes in the viscosity of the raw material, it is difficult to produce products having uniform quality, and there is also a problem of significant loss of raw material.

In addition, although a roll-to-roll type manufacturing apparatus is advantageous for mass production, continuous coating while maintaining a constant pattern pitch is limited due to the size of the rectangular frame of the metal mask, and the printed pattern may come into contact with a roll or other mechanical components.

### [Detailed description of the invention]

### [Technical Problem]

An object of the present invention is to provide a fabric transfer roller unit for a film-type edible product manufacturing apparatus, which enables favorable printing of an edible raw material and prevents peeling or damage of the printed edible raw material during transfer of the fabric, thereby allowing production of edible products having uniform quality.

### [Technical Solution]

As a technical solution for achieving the above object, a fabric transfer roller unit for a film-type edible product manufacturing apparatus according to the present invention is configured to guide transfer of a fabric in a state installed in an edible product manufacturing apparatus for manufacturing a film-type edible product by passing a fabric having a predetermined width continuously supplied from the outside and printing an edible raw material on an upper surface of the fabric, the fabric transfer roller unit comprising: a plurality of horizontal support rollers configured to horizontally support the fabric being transferred; a suction roller configured to adsorb a lower surface of the fabric having passed through the horizontal support rollers; a negative pressure supply unit configured to provide negative pressure to the suction roller; and a roller driving unit configured to rotate the suction roller about an axis so that the fabric receives a transfer force from the suction roller by action of the negative pressure.

Further, the edible product manufacturing apparatus includes a fabric support portion configured to support a lower surface of the fabric during printing and a printing portion configured to perform printing on an upper surface of the fabric, and the horizontal support rollers are positioned on an opposite side with the fabric support portion interposed therebetween so that the fabric horizontally passes over the fabric support portion.

Further, the suction roller is installed at a lower height than the horizontal support rollers.

Further, the suction roller includes: an adsorption drum provided with fine holes and configured to closely contact the lower surface of the fabric; an exhaust guide cap fixed to a side portion of the adsorption drum and connected to the negative pressure supply unit, the exhaust guide cap being provided with an exhaust port configured to discharge air inside the adsorption drum; and a roller shaft having one end fixed to the adsorption drum and the exhaust guide cap, respectively, and the other end rotatably supported by a support structure and configured to receive rotational force from the roller driving unit.

Further, a pressing roller is additionally installed at a downstream side of the suction roller, the pressing roller contacting an upper surface of the fabric having passed through the suction roller and downwardly supporting the fabric to maintain tension of the fabric.

Further, on an outer circumferential surface of the pressing roller, a pressing portion contacting a margin portion of the fabric where the edible product is not printed, and damage-prevention grooves formed between the pressing portions and spaced apart from the edible product to prevent pressing damage to the edible product are formed.

Further, the pressing portion has a predetermined width and takes a ring shape extending in a circumferential direction of the pressing roller.

Further, an angle between the fabric between the horizontal support rollers and the suction roller and the fabric between the suction roller and the pressing roller is an obtuse angle.

### [Advantageous Effects]

The fabric transfer roller unit for a film-type edible product manufacturing apparatus according to the present invention, configured as described above, enables favorable printing of an edible raw material by stably maintaining a transfer path of a continuously supplied fabric, and prevents peeling or damage of the printed edible raw material during transfer of the fabric, thereby allowing production of edible products having uniform quality.

### [Description of Drawings]

FIG. 1 is a view illustrating an edible product manufactured by an edible product manufacturing apparatus to which a fabric transfer roller unit according to an embodiment of the present invention is applied.
FIG. 2 is a perspective view illustrating an overall configuration of a film-type edible product manufacturing apparatus to which a fabric transfer roller unit according to an embodiment of the present invention is applied.
FIG. 3 is a view illustrating an arrangement structure of the fabric transfer roller unit applied in the manufacturing apparatus of FIG. 2.
FIGS. 4 and 5 are views for explaining an operation and relative positional relationship of the fabric transfer roller unit according to an embodiment of the present invention.
FIG. 6 is a view illustrating the fabric transfer roller unit shown in FIG. 5 as viewed from below.
FIG. 7 is a cutaway exploded perspective view of the suction roller of FIG. 3.
FIG. 8 is a view illustrating a printing unit and a fabric support portion of the product printer of FIG. 2 separately.
FIGS. 9 and 10 are perspective views for explaining a position adjustment method of the metal mask shown in FIG. 8.
FIG. 11 is a view separately illustrating the metal mask and a printing head.
FIG. 12 is a side view of the printing head of FIG. 11.

### [Best Mode]

Hereinafter, one embodiment according to the present invention will be described in more detail with reference to the accompanying drawings.

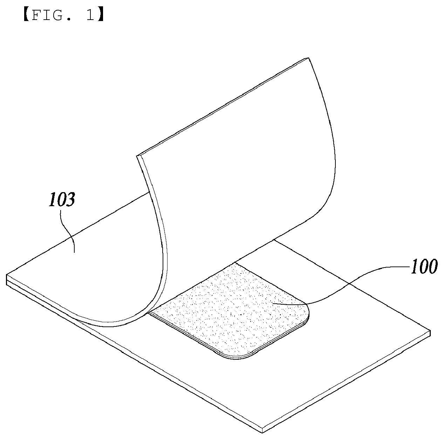

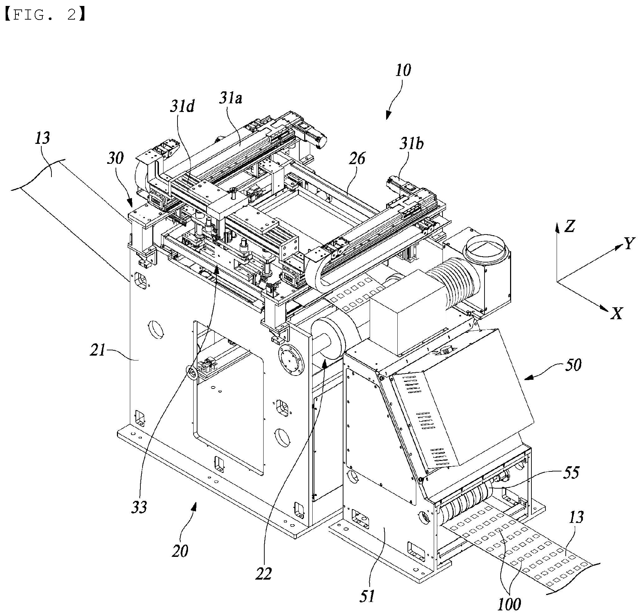

FIG. 1 is a view illustratively showing an edible product (100) manufactured by an edible product manufacturing apparatus (10 of FIG. 2) to which a fabric transfer roller unit according to an embodiment of the present invention is applied.

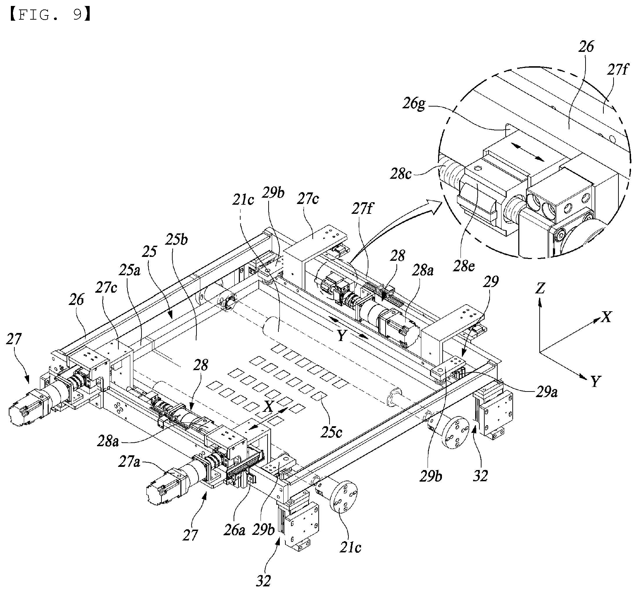

The illustrated edible product (100) is manufactured by printing an edible raw material, so to speak, using a screen printing method. That is, the product is manufactured by introducing a paste-state edible raw material (hereinafter referred to as an edible raw material (Z)) onto a metal mask (25) in which a plurality of printing holes (25c of FIG. 9) are formed and performing screen printing. Naturally, the shape of the edible product (100) reflects the shape of the printing holes (25c) of the metal mask. The edible raw material itself is conventional. The edible product (100) is hermetically accommodated in a packaging material (103).

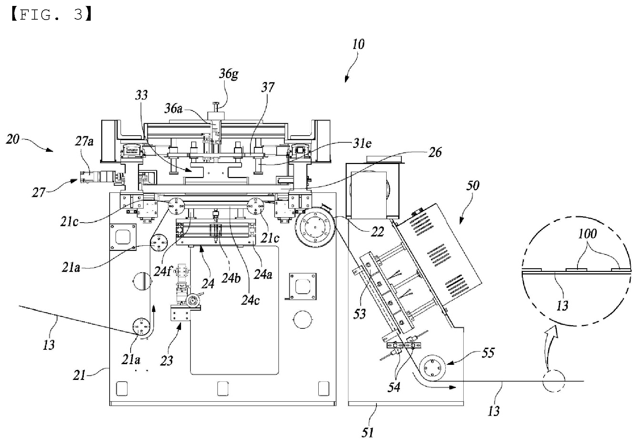

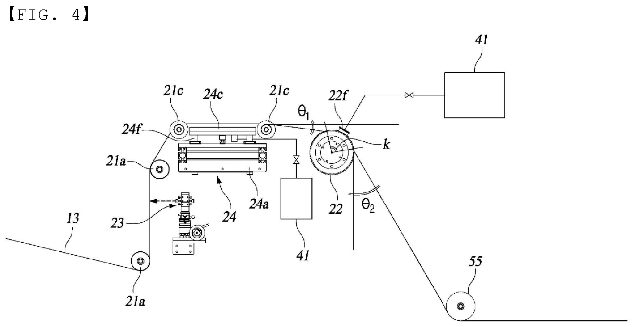

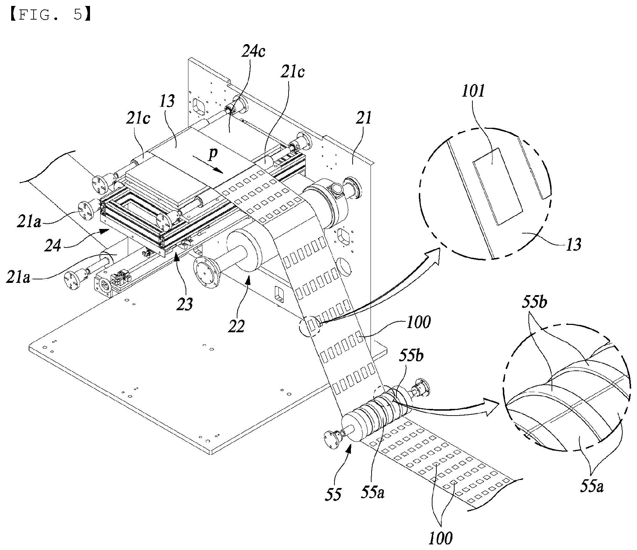

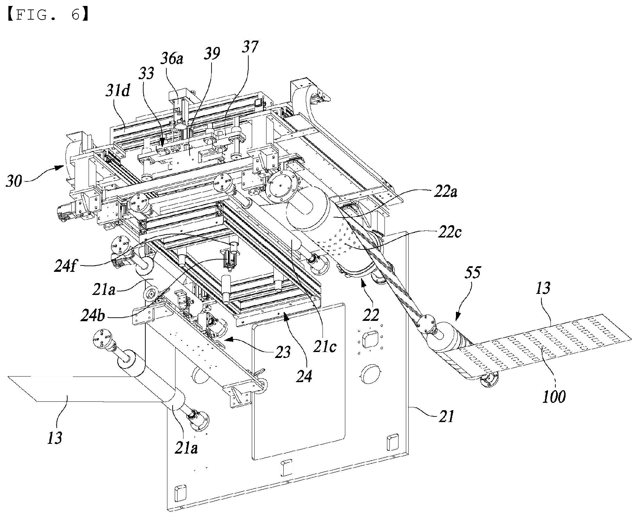

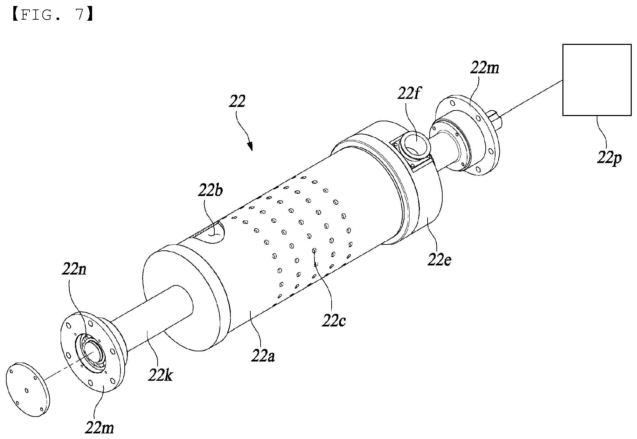

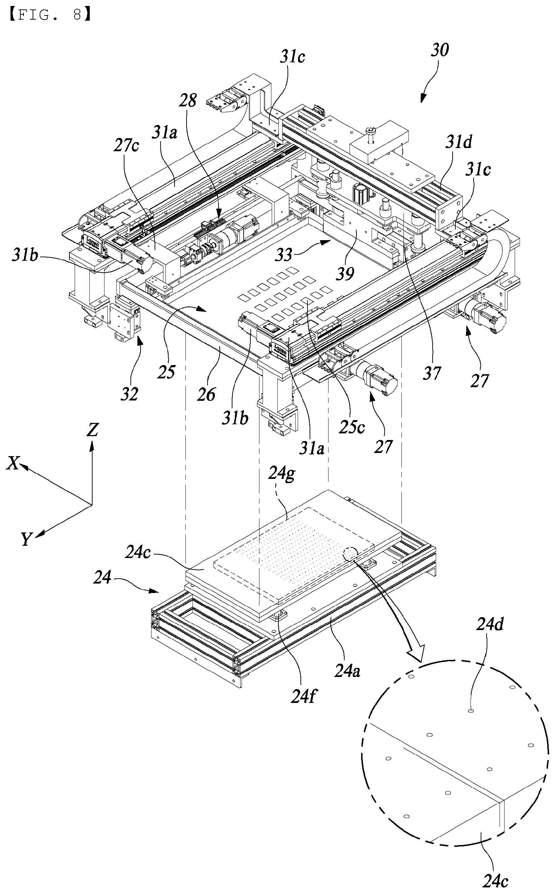

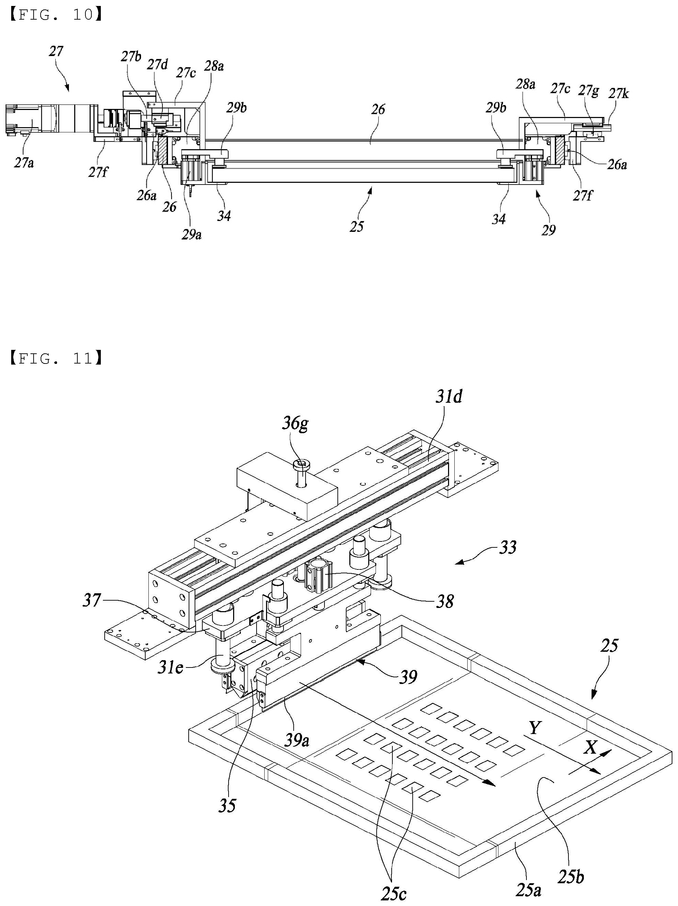

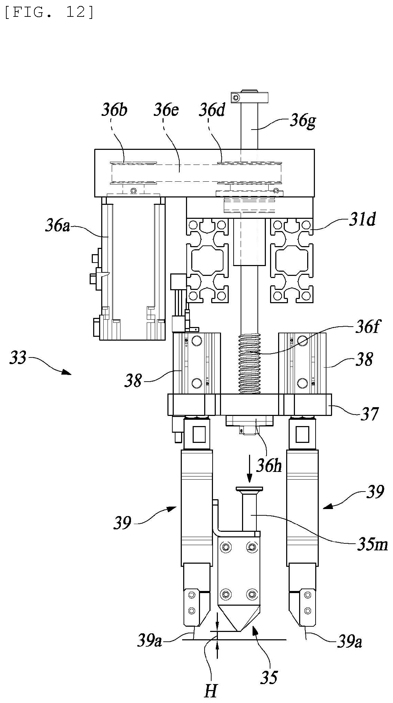

FIG. 2 is a perspective view illustrating an overall configuration of a film-type edible product manufacturing apparatus to which a fabric transfer roller unit according to an embodiment of the present invention is applied, and FIG. 3 is a view illustrating an arrangement structure of the fabric transfer roller unit applied in the manufacturing apparatus of FIG. 2. FIGS. 4 and 5 are views for explaining an operation and relative positional relationship of the fabric transfer roller unit according to an embodiment of the present invention, FIG. 6 is a view illustrating the fabric transfer roller unit shown in FIG. 5 as viewed from below, and FIG. 7 is a cutaway exploded perspective view of the suction roller of FIG. 3. Further, FIG. 8 is a view illustrating a printing unit and a fabric support portion in the product printer of FIG. 2 separately, FIGS. 9 and 10 are perspective views for explaining a position adjustment method of the metal mask shown in FIG. 8, FIG. 11 is a view separately illustrating the metal mask and a printing head, and FIG. 12 is a side view of the printing head of FIG. 11.

The fabric transfer roller unit according to the present embodiment guides transfer of a fabric (13) in a state installed in an edible product manufacturing apparatus that continuously manufactures a film-type edible product (100) by passing a fabric (13) having a predetermined width continuously supplied from the outside and printing the edible raw material (Z) on an upper surface of the fabric.

The fabric transfer roller unit includes a plurality of guide rollers (21a), two horizontal support rollers (21c), a suction roller (22), a negative pressure supply unit (41), a roller driving unit (22p), and a pressing roller (55). Among these components, the pressing roller (55) is included in a heating dryer (50), and the remaining components are mounted in a product printer (20).

The guide rollers (21a) guide the fabric introduced from the outside toward the horizontal support rollers (21c), and the horizontal support rollers (21c) serve to horizontally support the fabric (13) being transferred. The suction roller (22) adsorbs the lower surface of the fabric having passed through the horizontal support rollers, and the negative pressure supply unit (51) supplies negative pressure to the suction roller. Further, the roller driving unit (22p) rotates the suction roller about its axis so that the fabric receives a transfer force from the suction roller by the action of the negative pressure, and the pressing roller (55) downwardly supports the fabric after printing is completed to maintain tension of the fabric.

Since the fabric transfer roller unit according to the present embodiment is included in the edible product manufacturing apparatus (10) and is organically combined with other components, the transfer roller unit will be described together with an overall description of the edible product manufacturing apparatus (10).

As illustrated, the film-type edible product manufacturing apparatus (10) basically includes a product printer (20) and a heating dryer (50).

The product printer (20) prints the edible raw material on an upper surface of the fabric (13) passing therethrough, and the heating dryer (50) heats and dries the printed material (101 of FIG. 5), that is, the printed edible raw material.

The product printer (20) includes a support structure (21), the fabric transfer roller unit, a fabric support portion (24), and a printing unit.

The support structure (21) is a fixed frame erected on the ground. The fabric (13) continuously supplied from the outside passes through the interior of the support structure (21).

The fabric transfer roller unit is mounted inside the support structure (21) and guides transfer of the fabric (13) passing through the support structure (21). In the present embodiment, as described above, the fabric transfer roller unit includes a plurality of guide rollers (21a), two horizontal support rollers (21c), a suction roller (22), a negative pressure supply unit (41), a roller driving unit (22p), and a pressing roller (55).

As illustrated in FIGS. 3 and 4, the guide rollers (21a) are arranged vertically to guide the fabric (13) entering the support structure (21) toward the horizontal support rollers (21c).

The horizontal support rollers (21c) are positioned on an opposite side with the fabric support portion (24) interposed therebetween and support the fabric (13) so that the fabric passes horizontally over the fabric support portion (24). Two horizontal support rollers (21c) form one set and are installed on opposite sides with an adsorption horizontal plate (24c) of the fabric support portion (24) interposed therebetween to form a symmetrical structure. The fabric (13) supported by the horizontal support rollers (21c) maintains a horizontal state and is parallel to the upper surface of the adsorption horizontal plate (24c).

The suction roller (22) is installed at a lower height than the horizontal support rollers (21c) and transfers the fabric (13) after printing while adsorbing the lower surface thereof. Being installed at a lower height than the horizontal support rollers (21c) means that the suction roller is positioned at a point lower than the horizontal support rollers (21c) with reference to the ground.

As illustrated in FIG. 4, the suction roller (22) is installed at a height lowered downward by an angle θ1 relative to the rotational center axis of the right horizontal support roller (21c). In other words, an imaginary straight line connecting the center axis of the horizontal support roller (21c) and the center axis of the suction roller (22) is inclined at an angle of θ1 with respect to a horizontal line. θ1 may be 5° to 75°, and preferably may be 10° to 30°.

FIG. 7 illustrates the suction roller (22) separately. As illustrated, the suction roller (22) includes an adsorption drum (22a), an exhaust guide cap (22e), a roller shaft (22k), and a fixing disk (22m).

The suction roller (22) is connected to the negative pressure supply unit (41). The negative pressure supply unit (41) is a vacuum pump that draws air from a space portion (22b) of the suction roller (22). When the negative pressure supply unit (41) draws air, negative pressure is formed in the space portion (22b), and the fabric (13) contacting the adsorption drum is adsorbed onto an outer circumferential surface of the adsorption drum (22a). When the suction roller (22) rotates about its axis in the adsorbed state of the fabric, tension is generated in the fabric (13) on an upstream side of the suction roller (22).

The adsorption drum (22a) is a cylindrical member having a predetermined diameter that closely contacts the lower surface of the fabric (13) and has the space portion (22b) therein. A plurality of fine holes (22c) are formed in a peripheral portion of the adsorption drum (22a). The fine holes (22c) serve as passages through which external air is drawn into the adsorption drum (22a) when the internal pressure of the space portion (22b) decreases.

The exhaust guide cap (22e) is a hollow ring member fixed to a side portion of the adsorption drum (22a) and connected to the negative pressure supply unit (41) through an exhaust port (22f). The exhaust port (22f) is an opening through which the negative pressure supply unit (41) is connected. When the negative pressure supply unit operates, air inside the space portion (22b) is discharged to the outside through the exhaust port (22f), and negative pressure is formed in the space portion (22b). Accordingly, external air flows into the space portion (22b).

As the adsorption drum (22a) maintains the negative pressure, the fabric (13) contacting the outer circumferential surface of the adsorption drum (22a) is closely attached to the outer circumferential surface of the adsorption drum (22a) by the negative pressure. When the suction roller (22) rotates in this state, the rotational force of the suction roller (22) is transmitted to the fabric (13). Since the fabric (13) is adsorbed to the suction roller (22), slipping or meandering during transfer is prevented.

The roller shaft (22k) is a horizontal shaft in which one end is fixed to the adsorption drum (22a) and the exhaust guide cap (22e), respectively, and the other end is rotatably supported by the support structure (21) through a fixing disk (22m). A bearing (22n) is mounted between each roller shaft (22k) and the fixing disk (22m). The roller shaft (22k) is rotatable about its axis while being supported by the bearing (22n).

In particular, one of the roller shafts (22k) is connected to the roller driving unit (22p) and rotates about its axis by receiving rotational force from the roller driving unit (22p). The roller driving unit (22p) is a motor that rotates the suction roller (22) about its axis. When the suction roller (22) rotates about its axis by the roller driving unit (22p), the fabric adsorbed by the action of the negative pressure receives a transfer force from the suction roller. The roller driving unit (22p) is one of a plurality of fabric transfer means for transferring the fabric (13).

The pressing roller (55) is positioned on a downstream side of the suction roller (22), contacts an upper surface of the fabric that has passed through the suction roller (22), and downwardly supports the fabric to maintain tension thereof. The pressing roller (55) is included in the heating dryer (50), which will be described later.

The fabric support portion (24) is installed below a transfer path of the fabric (13) and supports the fabric to prevent sagging thereof when the edible raw material is printed on the upper surface of the fabric (13). The fabric support portion (24) includes a support frame (24a), an adsorption horizontal plate (24c), vertical rods (24f), and an adsorption plate cylinder (24b).

The support frame (24a) has a rectangular frame shape and is horizontally fixed inside the support structure (21). The support frame (24a) supports the vertical rods (24f) so as to be movable up and down. Each vertical rod (24f) is supported by the support frame (24a), is a vertically extending round bar, and has the adsorption horizontal plate (24c) at an upper end thereof.

The adsorption horizontal plate (24c) is a rectangular horizontal plate that can move up and down above the support frame (24a). As illustrated in FIG. 8, a negative pressure space (24g) is provided inside the adsorption horizontal plate (24c). The negative pressure space (24g) is connected to an external negative pressure supply unit (41) and is opened upward through a plurality of adsorption holes (24d).

When the internal pressure of the negative pressure space (24g) is lowered through the negative pressure supply unit (41), air above the adsorption horizontal plate (24c) is drawn into the adsorption horizontal plate (24c). When the adsorption horizontal plate (24c) is raised to closely contact the lower surface of the fabric (13) and the negative pressure supply unit (41) is operated, the fabric (13) is fixed to the upper surface of the adsorption horizontal plate (24c) by the action of the negative pressure.

The adsorption plate cylinder (24b) moves the adsorption horizontal plate (24c) up and down. Through the adsorption plate cylinder (24b), the adsorption horizontal plate (24c) can be raised or lowered within a predetermined stroke range.

Meanwhile, the printing unit includes a metal mask (25) and a printing unit (30).

The metal mask (25) is installed above the fabric support portion (24) so as to be movable up and down and is configured to closely contact the upper surface of the fabric (13) during printing, and, as illustrated in FIG. 9, has a plurality of printing holes (25c) through which the edible raw material passes.

The metal mask (25) is position-adjustable in X, Y, and Z directions above the transfer path of the fabric (13). The metal mask (25) includes a horizontal mask plate (25b) having a predetermined thickness and side walls (25a). A lower surface of the mask plate (25b) may closely contact the upper surface of the fabric (13). The thickness of the mask plate (25b) may vary. Naturally, as the thickness of the mask plate (25b) increases, the thickness of the edible product (100) also increases.

A plurality of printing holes (25c) are formed in a central region of the mask plate (25b). The printing holes (25c) are rectangular through-holes arranged at predetermined intervals in the X direction and the Y direction. The side walls (25a) form a rectangular frame integrally surrounding the upper surface of the mask plate (25b) and prevent the edible raw material introduced onto the mask plate (25b) from being pushed outward beyond the mask plate (25b).

A mask position adjusting unit is connected to the metal mask (25) and serves to adjust a position of the metal mask. The metal mask (25) is capable of three-dimensional movement in forward, backward, left, right, upward, and downward directions by the mask position adjusting unit.

The reason why the metal mask (25) is configured to be position-adjustable in the X direction is to compensate for possible errors in a transfer distance of the fabric (13) in a longitudinal direction (transfer direction). The fabric (13) is step-transferred by a predetermined pitch distance, and an error may occur in the pitch distance due to slipping or other causes. The position adjustment compensates for such an error. For example, if an input pitch distance is 50 cm but the actual transferred length of the fabric is 49 cm, the mask position adjusting unit moves the metal mask (25) by 1 cm in a direction opposite to the fabric transfer direction.

In addition, the reason why the metal mask (25) is configured to be position-adjustable in the Y direction is to compensate for possible misalignment of the fabric (13) in a width direction. For example, if the fabric is eccentrically shifted about 5 mm to a left side in the width direction, the mask position adjusting unit moves the metal mask (25) by about 5 mm in the opposite direction.

Further, the metal mask (25) is designed to be movable up and down in the Z direction for printing the edible raw material (Z). The mask position adjusting unit lowers the metal mask (25) so that a lower surface thereof closely contacts the upper surface of the fabric (13), and printing is performed by supplying the edible raw material (Z). After printing is completed, the metal mask (25) is raised again to allow the fabric (13) to be transferred.

The mask position adjusting unit includes a mask receiving frame (26), rod brackets (34), an X driving unit (27), a Y driving unit (28), and a Z driving unit (29).

The mask receiving frame (26) is a rectangular frame surrounding the metal mask (25) and has frame cylinders (32) at lower portions of four corners thereof. The frame cylinders (32) adjust a vertical position of the mask receiving frame (26) while being fixed to the support structure (21).

Y rails (26a) are horizontally mounted on outer surfaces of both ends of the mask receiving frame (26) in the X direction. The Y rails (26a) guide movement of sliding connectors (27f) in the Y direction.

Each rod bracket (34) is a bar-shaped member having a widthwise central portion bent at a right angle and horizontally supports the metal mask (25) while being positioned on an opposite side with the metal mask (25) interposed therebetween. Each rod bracket (34) is fixed to an end of a connection bracket (27c). Since the connection bracket (27c) is indirectly fixed to the mask receiving frame (26), the rod brackets (34) remain fixed inside the mask receiving frame (26).

The X driving unit (27) performs position adjustment of the metal mask (25) in the X direction. The X driving unit (27) includes an X motor (27a), a lead screw (27b), a sliding connector (27f), a connection bracket (27c), and a nut block (27d) .

The X motor (27a) is supported by the sliding connector (27f) and outputs rotational force while maintaining a horizontal state. That is, the lead screw (27b) is rotated about its axis in a clockwise or counterclockwise direction. The sliding connector (27f) is supported by the Y rail (26a) and is position-adjustable in the Y direction.

The nut block (27d) is a component engaged with the lead screw (27b) and is fixed to the connection bracket (27c). The connection bracket (27c) is an L-shaped member, one end of which is fixed to the rod bracket (34). Ultimately, the metal mask (25) moves in the X direction by operation of the X motor (27a).

The sliding connector (27f) located on the right side in FIG. 10 is also supported by the Y rail (26a) and includes a second Y rail (27g) and an X rail (27k) on an upper portion thereof. The second Y rail (27g) is parallel to the Y rail (26a) and supports the X rail (27k) so as to be position-adjustable in the Y direction. The X rail (27k) supports an end portion of the connection bracket (27c).

Accordingly, the X driving unit (27) itself is supported by the mask receiving frame (26) so as to be position-adjustable in the Y direction and moves the metal mask (25) in the X direction through the X motor (27a).

The Y driving unit (28) serves to move the metal mask (25) in the Y direction. The Y driving unit (28) includes a Y motor (28a), a lead screw (28c), and a nut block (28e).

The Y motor (28a) is fixed inside the mask receiving frame (26) and rotates the lead screw (28c) about its axis in both directions. The nut block (28e) engages with the lead screw (28c). The nut block (28e) is a member coupled to the lead screw (28c) and is connected to the sliding connector (27f) through a side passage (26g). The side passage (26g) is an opening through which the nut block (28e) passes.

When the Y motor (28a) is driven, the nut block (28e) moves in the Y direction within the side passage (26g). At this time, the sliding connector (27f) connected to the nut block (28e) also moves together.

The Z driving unit (29) includes Z cylinders (29a) fixed to both ends of the rod brackets (34) and connection arms (29b). The connection arms (29b) connect the Z cylinders (29a) and the metal mask (25). The connection arms (29b) move up and down by operation of the Z driving unit (29). Accordingly, the metal mask (25) performs vertical movement by the Z driving unit (29).

As described above, the metal mask (25) is movable in forward, backward, left, right, upward, and downward directions by the X, Y, and Z driving units (27, 28, and 29).

Meanwhile, the printing unit (30) supplies the edible raw material (Z) onto an upper portion of the metal mask (25) and spreads the supplied edible raw material over the metal mask (25), similar to silk-screen printing, so that the edible raw material fills the printing holes (25c). The edible raw material filled in the printing holes (25c) becomes the edible product (100) after drying and packaging.

The printing unit (30) includes a printing head (33) and a head driving unit.

The head driving unit reciprocates the printing head (33) so that the printing head (33) prints the edible product (100) on the fabric (13). The head driving unit includes cross rails (31a), sliders (31c), and a supporter (31d).

Each cross rail (31a) is a linear member extending in a direction perpendicular to a transfer direction of the fabric (13). Two cross rails (31a) are spaced apart from each other in parallel with the metal mask (25) interposed therebetween.

The sliders (31c) are slidably mounted on the respective cross rails (31a) and support both ends of the supporter (31d). A squeezing motor (31b) is installed on each slider (31c). The sliders (31c) reciprocate by the squeezing motor (31b).

The supporter (31d) is a horizontal beam extending across the metal mask (25), and supports the printing head (33) while both ends thereof are fixed to the sliders. As illustrated in FIG. 12, the printing head (33) includes a lifting support plate (37), a support plate lifting unit, a raw material discharge unit (37), a pair of squeegees (39), and squeegee lifting means.

The lifting support plate (37) is a horizontal plate installed below the reciprocating beam (31d) so as to be movable up and down. Vertical movement of the lifting support plate (37) is performed by the support plate lifting unit. The vertical movement of the lifting support plate (37) is guided by vertical guide rods (31e). Each vertical guide rod (31e) is a vertical round bar having an upper end fixed to the reciprocating beam (31d).

The support plate lifting unit repeatedly raises and lowers the lifting support plate (37), and includes a servo motor (36a), a belt (36e), a vertical screw (36g), and a nut portion (36h).

The servo motor (36a) is a rotational force generating unit vertically installed on a side of the supporter (31d) and has a driving pulley (36b) on a driving shaft thereof. The vertical screw (36g) is a vertical rod rotatably installed on the supporter (31d) and has a male screw portion (36f) at a lower portion thereof. A driven pulley (36d) is mounted on the vertical screw (36g). The driven pulley (36d) is connected to the driving pulley (36b) through the belt (36e). When the servo motor (36a) is driven, the vertical screw (36g) rotates about its axis.

The nut portion (36h) is fixed to a lower surface of the lifting support plate (37) and is screw-coupled with the male screw portion (36f). Accordingly, when the vertical screw (36g) rotates, the lifting support plate (37) moves up and down.

The squeegees (39) are disposed below the lifting support plate (37) in parallel with each other and have squeezing blades (39a) at lower ends thereof. A squeegee lifting cylinder (38) is installed above each squeegee (39). The squeegee lifting cylinder (38) is fixed to the lifting support plate (37) and serves as squeegee lifting means for raising and lowering the squeegee (39) .

The squeegee lifting cylinders (38) on both sides alternately lower the squeegees. For example, when the left squeegee (39) in the drawing is lowered, the right squeegee (39) is raised, and when the right squeegee (39) is lowered, the left squeegee is raised. When the squeegee (39) is lowered, the squeezing blade (39a) linearly contacts the mask plate (25b).

The raw material discharge unit is installed between the two squeegees (39) and discharges the paste-state edible raw material supplied from outside onto the metal mask. In the present embodiment, the raw material discharge unit is a slit die (35). The slit die (35) is installed between the two squeegees (39) and is mounted on the left squeegee (39) in the drawing of FIG. 12.

A lower end of the slit die (35) is relatively higher than a lower end of the squeezing blade (39a) of the left squeegee (39) by a height H. Thus, when the squeezing blade (39a) contacts the mask plate (25b), the slit die (35) remains spaced apart.

As described above, when one squeegee (39) is lowered, the opposite squeegee (39) is raised. Therefore, when the right squeegee (39) in FIG. 12 is lowered, the slit die (35) is raised further higher than the height H. Since the slit die (35) is always spaced apart from the mask plate (25b), discharge of the edible raw material (Z) from the slit die (35) proceeds smoothly at all times.

The squeegee lifting means is a squeegee cylinder (38) located above the lifting support plate (37) and configured to independently raise and lower each squeegee. The squeegees (39) on both sides move up and down by the squeegee cylinders (38). The squeegee cylinders (38) alternately lower the squeegees. As described above, when one squeegee (39) is lowered, the opposite squeegee is raised.

Meanwhile, the heating dryer (50) serves to dry the printed material (101) printed on the fabric that has passed through the product printer (20). The printed material (101) is the edible raw material printed on the fabric, and becomes the edible product (100) after being dried.

The heating dryer (50) includes a cabinet (51), a heater (53), a temperature sensor (54), and the pressing roller (55). The cabinet (51) is a case through which the fabric (13) passes and accommodates the heater (53) and the temperature sensor (54).

The temperature sensor (54) senses a temperature of the fabric (13) and transmits temperature information to a controller (not shown). The controller adjusts a heating temperature of the heater (53) to an optimal range based on the received temperature information. The heating method of the heater (53) may be implemented in various ways, such as IR, NIR, MIR, Xeon lamp, laser lamp, UV lamp, LED lamp, and the like.

The pressing roller (55) is a roller installed on a downstream side of the suction roller (22) and contacts an upper surface of the fabric that has passed through the suction roller to downwardly support the fabric.

In particular, an angle between the fabric between the right horizontal support roller (21c) and the suction roller (22) and the fabric between the suction roller (22) and the pressing roller (55) in FIG. 4 is within an obtuse angle range. As the angle decreases, a probability that the printed material (101) lifts from the fabric increases. Therefore, the angle is preferably greater than at least 90 degrees.

Further, an angle (θ2 in FIG. 14) of the fabric (13) connecting the suction roller (22) and the pressing roller (55) with respect to a vertical line may be, for example, 30 degrees. As the angles (θ1, θ2) decrease, an adhesion area of the fabric (13) with respect to the suction roller (22) increases. In other words, an angle (k in FIG. 14) between a point where the fabric (13) begins to contact the adsorption drum (22a) and a point where the fabric separates from the adsorption drum (22a) becomes larger.

A damage prevention groove (55a) and pressing portions (55b) are formed on an outer circumferential surface of the pressing roller (55). The pressing portions (55b) are ringshaped protrusions contacting margin portions of the fabric where the edible products are not printed, that is, portions of the upper surface of the fabric not covered by the edible products. The pressing portions (55b) have a predetermined width and take the form of rings extending in a circumferential direction of the pressing roller (55). The pressing portions (55b) support the fabric (13) downward so that the fabric (13) maintains a taut state.

The damage prevention grooves (55a) are formed between the respective pressing portions (55b) and are spaced apart from the edible products (100) to prevent the edible products from being pressed and damaged. The damage prevention grooves (55a) extend in a circumferential direction of the pressing roller (55) and have predetermined widths and depths. The width of each damage prevention groove (55a) is greater than the width of the printed material (101). Accordingly, since the damage prevention grooves (55a) are formed in the pressing roller (55), even when the fabric (13) passes below the pressing roller (55) during transfer, the printed material (101) is not pressed or damaged, and a tension state of the fabric (13) is stably maintained.

Accordingly, the fabric transfer roller unit according to the present embodiment, configured as described above, enables favorable printing of the edible raw material by stably maintaining a transfer path of the continuously supplied fabric, and prevents peeling or damage of the printed edible raw material during transfer of the fabric, thereby enabling production of edible products having uniform quality.

Although the present invention has been described in detail with reference to specific embodiments, the present invention is not limited to the above embodiments, and various modifications may be made by those skilled in the art within the scope of the technical spirit of the present invention.

### [Industrial Applicability]

The present invention has industrial applicability in that it stably maintains a transfer path of a continuously supplied fabric and prevents lifting or damage of printed matter printed on the fabric.

## Claims

1. A fabric transfer roller unit for a film-type edible product manufacturing apparatus, the unit guiding transfer of a fabric in a state installed in an edible product manufacturing apparatus for manufacturing a film-type edible product by passing a fabric having a predetermined width continuously supplied from outside and printing an edible raw material on an upper surface of the fabric, the fabric transfer roller unit comprising:
a plurality of horizontal support rollers configured to horizontally support the fabric being transferred;
a suction roller configured to adsorb a lower surface of the fabric having passed through the horizontal support rollers;
a negative pressure supply unit configured to provide negative pressure to the suction roller; and
a roller driving unit configured to rotate the suction roller about an axis so that the fabric receives a transfer force from the suction roller by action of the negative pressure.

2. The fabric transfer roller unit for a film-type edible product manufacturing apparatus according to claim 1,
wherein the edible product manufacturing apparatus includes a fabric support portion configured to support a lower surface of the fabric during printing and a printing unit configured to perform printing on an upper surface of the fabric, and
wherein the horizontal support rollers are positioned on an opposite side with the fabric support portion interposed therebetween so that the fabric passes horizontally over the fabric support portion.

3. The fabric transfer roller unit for a film-type edible product manufacturing apparatus according to claim 2,
wherein the suction roller is installed at a lower height than the horizontal support rollers.

4. The fabric transfer roller unit for a film-type edible product manufacturing apparatus according to claim 3,
wherein the suction roller comprises:
an adsorption drum provided with fine holes and configured to closely contact the lower surface of the fabric;
an exhaust guide cap fixed to a side portion of the adsorption drum and connected to the negative pressure supply unit, the exhaust guide cap being provided with an exhaust port configured to discharge air inside the adsorption drum; and
a roller shaft having one end fixed to the adsorption drum and the exhaust guide cap, respectively, and the other end rotatably supported by a support structure and configured to receive rotational force from the roller driving unit.

5. The fabric transfer roller unit for a film-type edible product manufacturing apparatus according to claim 1,
further comprising a pressing roller positioned on a downstream side of the suction roller, the pressing roller contacting an upper surface of the fabric having passed through the suction roller and downwardly supporting the fabric to maintain tension of the fabric.

6. The fabric transfer roller unit for a film-type edible product manufacturing apparatus according to claim 5,
wherein an outer circumferential surface of the pressing roller is provided with:
pressing portions contacting margin portions of the fabric where the edible products are not printed; and damage prevention grooves formed between the pressing portions and spaced apart from the edible products to prevent pressing damage to the edible products.

7. The fabric transfer roller unit for a film-type edible product manufacturing apparatus according to claim 6,
wherein each of the pressing portions has a predetermined width and has a ring shape extending in a circumferential direction of the pressing roller.

8. The fabric transfer roller unit for a film-type edible product manufacturing apparatus according to claim 5,
wherein an angle between the fabric between the horizontal support rollers and the suction roller and the fabric between the suction roller and the pressing roller is an obtuse angle.
